# EUROPEAN PATENT SPECIFICATION

(11) **EP 1 780 076 B1**
(45) Date of publication and mention of the grant of the patent: **28.12.2011**
(21) Application number: 05023646.2
(22) Date of filing: 28.10.2005
(51) Int. Cl.: B60N 2/72, B60N 2/70, A47C 7/34

(54) **Mounting device and method and apparatus for manufacturing the same**
Befestigungsvorrichtung und Verfahren und Vorrichtung zur Herstellung derselben
Dispositif de fixation et procédé et dispositif de fabrication associé

(43) Date of publication of application: 02.05.2007
(73) Proprietor: L&P Swiss Holding Company, 9303 Wittenbach (CH)
(72) Inventor: Catry, Pierrot, 8587 Spiere (BE); Buyse, Danny, 8560 Gullegem (BE); Samain, Maxime, 8870 Izegem (BE)
(74) Representative: Banzer, Hans-Jörg

(56) References cited:
- EP-A- 1 112 709
- EP-A- 1 493 618
- WO-A-2005/005193
- DE-A1- 1 554 040
- FR-A- 2 861 660
- GB-A- 1 150 781
- US-B1- 6 637 824

## Description

The present invention relates to a mounting device for mounting a wire or a wire assembly to a fixed structure. Furthermore, the present invention relates to a method and an apparatus for manufacturing such a mounting device. In particular, the present invention relates to a mounting device for mounting a wire assembly like a suspension mat to a seat frame or a similar fixed structure in a vehicle like a car.

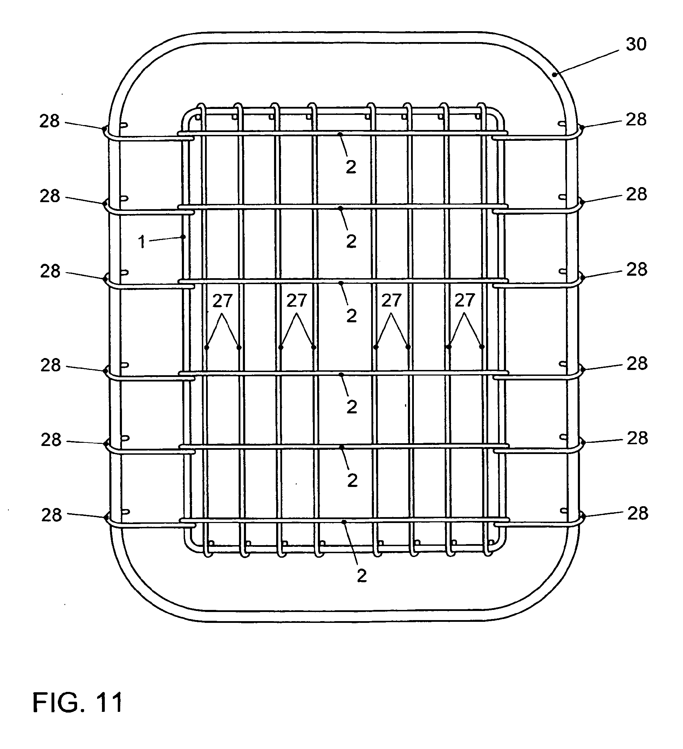

Such suspension mats are incorporated into the backrest of seats in order to provide stability and resiliency to the backrest. A known example of such a suspension mat suspended in a seat frame is shown in Fig. 11.

The suspension mat shown comprises a suspension mat frame 1, vertical wires 27 and transverse wires 2. Ends of the vertical wires 27 are wound around horizontal portions of the suspension mat frame 1 for fixing the vertical wires 27 to the suspension mat frame 1. Ends of the transverse wires 2 are correspondingly wound around vertical portions of the suspension mat frame 1. However, the transverse wires 2 extend beyond the vertical running portions of the suspension mat frame 1, and their ends are bent to hook-like fingers 28 which are used for mounting the suspension mat to a seat frame 30, i.e. the hook-like fingers 28 are hooked onto vertical portions of the seat frame 30. It should be noted that there are also assemblies where only some of the transverse wires 2 end in hook-like fingers 28 to be hooked onto the seat frame 30. Also, instead of some of the hook-like fingers 28, adjusting mechanisms for adjusting the suspension mat in the seat frame or springs may be present.

Such structures as shown in Fig. 11 are in particular present in automobile seats.

Since both the transverse wires 2 and the seat frame 30 usually are made of metal, when force is exerted on the suspension mat, for example by an occupant seating himself on the seat, the hook-like fingers 28 may move slightly on the seat frame 30, thereby producing a scraping noise. The same may happen through vibrations in a vehicle equipped with such a suspension mat arrangement. This noise may be disturbing to occupants of the seat or the vehicle.

In order to solve this problem, it is known to coat at least the hook-like fingers 28 with a plastic or rubber type coating. This coating helps to prevent the noise and vibration problems. However, for applying this coating special apparatuses are necessary since coating often implies the use of chemicals which have to be kept in a closed cycle. Furthermore, the complete suspension mats have to be transported to the location where the coating machine is located. This makes the production process more complicated and more expensive.

Furthermore, while the hook-like fingers 28 shown in Fig. 11 are suitable for mounting the suspension mat to a seat frame, in some cases it may be necessary to mount a wire assembly like a suspension mat to a fixed structure which does not offer suitable holds for hooks.

From DE 15 54 040 A, a method for manufacturing a mounting device is known, whereby an end portion of a wire is bent to form a hook and, thereafter, a hollow tube is placed over the bent wire hook.

GB 1,150,781 A disclosed clips for mounting wire springs, especially sinusoidal springs for mattresses or seats etc., the clips being sheathed by a plastic member.

WO 2005/005193 A1 discloses a mounting hook for mounting a wire array on a seat frame. According to this document, the plastic mounting hook is placed on a mounting wire by inserting the wire through a through hole of the mounting hook. Thereafter, the mounting hook is moved towards the wire array, the wire is then bent at a transverse angle forming a wire bend, and the mounting hook is moved from its position near the wire array to this wire bend. The wire bend prevents the mounting hook from sliding off the mounting wire.

Further mounting devices, which can be used for mounting a wire or a wire assembly to a fixed structure, especially for mounting a suspension mat to a seat frame, are known from EP 1 112 709 A1, EP 1 493 618 A2, and US 6,637,824 B1.

It is an object of the present invention to provide a method for manufacturing a mounting device for mounting a wire to a structure, whereby the mounting device allows to mount the wire without the danger of excessive noise generation during use. Furthermore, it is an object of the present invention to provide an apparatus for manufacturing such a mounting device.

According to the present invention, this object is achieved by a method as defined in independent claim 1 and an apparatus as defined in independent claim 14, respectively. Preferred embodiments of the invention are defined in the dependent claims.

Further features and advantages of the present invention as well as the structure and operation of embodiments of the present invention are described in detail below with reference to the accompanying drawings, wherein:
Fig. 1 shows a first step of manufacturing a mounting device according to a first embodiment of the present invention,
Fig. 1A shows an enlarged portion of Fig. 1,
Fig. 2 shows a second step of manufacturing the mounting device according to the first embodiment,
Fig. 3 shows a third step for manufacturing the mounting device according to the first embodiment,
Fig. 4 shows a fourth step of manufacturing the mounting device according to the first embodiment,
Fig. 5 shows a perspective view of a mounting device not according to the present invention,
Fig. 6 shows a side view of the mounting device of Fig. 5 with a wire attached thereto,
Fig. 7 shows the mounting device of Fig. 5 mounted to a corresponding mounting structure,
Fig. 8 shows a mounting device not according to the present invention with a wire attached thereto,
Fig. 9 shows a mounting structure for the mounting device of Fig. 8,
Fig. 10 shows the mounting device of Fig. 8 mounted to the mounting structure of Fig. 9, and
Fig. 11 shows a suspension mat mounted to a seat frame.

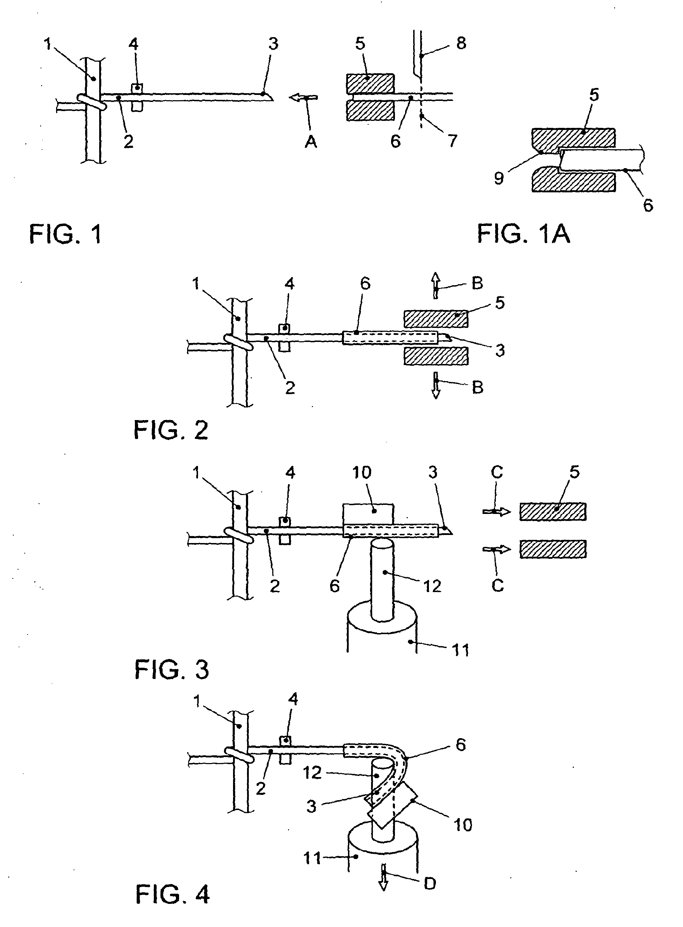

In Fig. 1, a first step for manufacturing a mounting device according to embodiment of the present invention is shown. This manufacturing takes place in an apparatus for manufacturing said mounting device.

By way of example, the mounting device according to the embodiment is manufactured using a wire end 3 of a transverse wire 2 of a suspension mat like the one shown in Fig. 11 and already described in the introductory portion, said transverse wire 2 being wound around a suspension mat frame 1. In the manufacturing apparatus according to the shown embodiment, the transverse wire 2 is held in place by a wire holder 4. Furthermore, a hollow tube 6 made from a plastic material is held by a tube holder 5 and cut to a desired length by a cutter 8 along a cutting line 7. The tube 6 is preferably made from a plastic material like polyoxymethylene (POM). In principle, any material which preferably has good abrasive resistance, does not produce significant noise when sliding on a metal and which may be bent without damage may be used.

Fig. 1A shows an enlarged view of the tube holder 5 holding the tube 6. As can be seen in Fig. 1A, the tube holder 5 comprises two halves between which the tube 6 is sandwiched. Each of the halves has a protrusion 9 at a portion facing the wire 2. The protrusion 9 has a step on its end facing the tube 6 for positioning the tube 6 and a slope for guiding the wire 3 on its end facing the wire 2.

After the tube 6 is cut along the cut line 7 by the cutter 8, the tube 6 is pushed onto the end portion 3 of the wire 2 as indicated by an arrow A in Fig. 1. The slopes of the protrusion 9 aid in guiding the end portion 3 into the tube 6.

Fig. 2 shows a second step of manufacturing the mounting device according to the embodiment. In the state shown in Fig. 2, the tube 6 has been pushed completely onto the end portion 3 of the transverse wire 2. After this, the tube holder 5 is opened, i.e. the two halves of the tube holder 5 are moved as indicated by arrows B in Fig. 2. Thus, the tube 6 is released from the tube holder 5.

Fig. 3 shows a third manufacturing step. In this step, the tube holder 5 is removed from the end portion 3 of the wire 2 as indicated by arrows C. Furthermore, a bending mechanism comprising a movable bending block 10, a bending cylinder 12 and a cylinder holder 11 are moved to the end portion 3 with the tube 6. The cylinder holder 11 holds the bending cylinder 12. The bending cylinder 12 has a radius corresponding to the radius of curvature of the completed mounting device as explained below. In the example of the suspension mat to be attached to a seat frame, the diameter of the bending cylinder 12 preferably has a diameter equal to or slightly greater than the diameter of the seat frame 30 of Fig. 11.

Fig. 4 shows a fourth and last manufacturing step. In this step, the bending block 10 is moved such that the end portion 3 of the wire 2 together with the tube 6 is bent around the bending cylinder 12. Thereafter, the bending mechanism comprising bending block 10, bending cylinder 12 and cylinder holder 11 is removed from the end portion 3 as indicated by an arrow D, leaving the mounting device according to the first embodiment of the present invention comprising the bent end portion 3 together with the bent tube 6 surrounding the bent end portion 3 behind. Since the bent end portion 3 is covered by the tube 6, noises generated by metal moving on metal may be avoided.

It should be noted that the apparatus for manufacturing the mounting device according to the embodiment may be designed such that in case of multiple wires to be formed into mounting devices like in case of the suspension mat of Fig. 11 the wires may be formed consecutively, or the apparatus may have multiple wire holders 4, tube holders 5, cutters 8 and bending mechanisms 10, 11, 12 so that all the end portions of the wires may be formed simultaneously into mounting devices according to the present invention. Moreover, it should be noted that the present invention is applicable to other types of wires than transverse wires of suspension mats as well. In particular, sometimes suspension mats are anchored to seat frames using springs, and the end of the wires forming the springs may be treated in the same way as the end portion 3 shown in Figs. 1-4, i.e. a tube may be pushed onto them and they may be bent afterwards.

It should be noted that since the tube 6 is bent together with the end portion 3 of the wire 2, the tube 6 is automatically held in place on the end portion 3, and no additional adhesive or heat treatment is needed. If, however, for some reasons this attachment of a tube 6 on the end portion 3 is not durable enough in a particular application, the tube 6 may be adhered to the end portion 3 by heat treatment, or an adhesive may be used.

It should be noted that, as an alternative to the manufacturing method as described above, the tube may also have a slit such that it may be clipsed onto the end portion 3 of the wire 2. However, since in this case the tube has a slit, the resulting mounting device may be less stable than the mounting device fabricated by the manufacturing method described with reference to Figs. 1-4.

The embodiment of the mounting device of the present invention, the manufacturing of which has been explained above, is particularly suitable for mounting the wire to a bar-like structure like the seat frame 30 shown in Fig. 11. However, sometimes wires have to be mounted to plane-like structures. One possibility would be to provide openings suitable for attaching hooks thereto. In this case, the first embodiment as described above may be used as a mounting device.

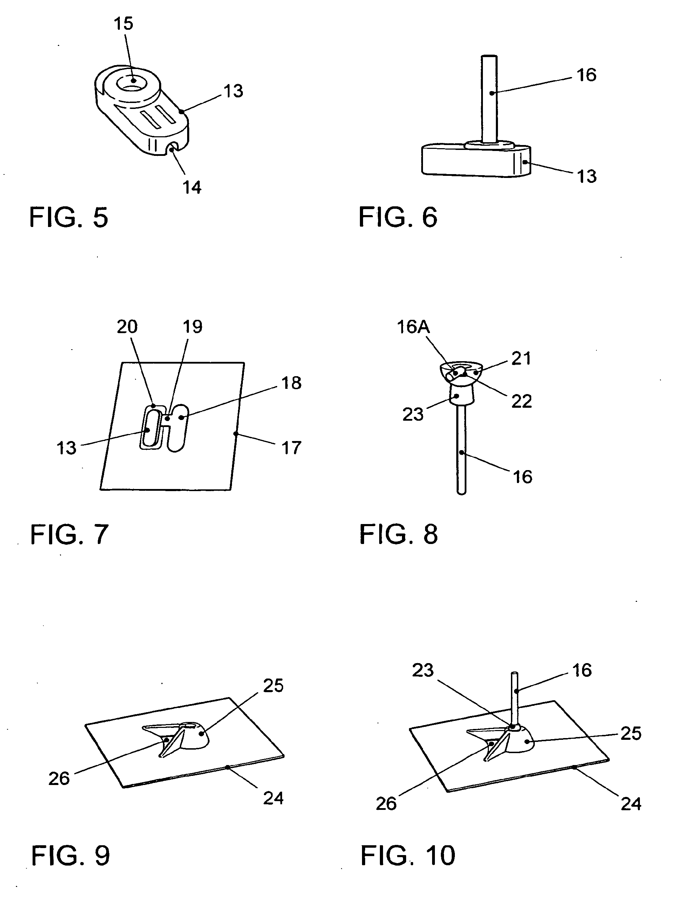

Alternative mounting devices not according to the present invention are described below with reference to Figs. 5-10.

The mounting device shown in Fig. 5 has a shoe-like, approximately cuboid body 13 with a through hole 15 and a channel 14. The channel 14 is connected with the through hole 15. In Fig. 5, the channel 14 and the through hole 15 form an angle of approximately 90 degrees. However, other angles, in particular acute angles, are also possible. The through hole 15 shown in Fig. 5 is surrounded by a ring-like wall.

For attaching a wire 16 to the mounting device as shown in Fig. 6, the wire 16 is guided through the through hole 15 and then bent to a 90 degree angle (for example by a bending mechanism as the one shown in Figs. 3 and 4 explained above), and then the body 13 is positioned such that the bent part of the wire 16 resides in the channel 14. Therefore, the mounting device is attached to the wire 16 and in particular cannot be rotated since the bent end of the wire 16 resides in the channel 14.

In Fig. 7, a mounting structure in a panel 17 or a similar plane element for receiving the mounting device of Figs. 5 and 6 is shown. The mounting structure has a hole 18, a connection 19 and a seat 20. The hole 18 is dimensioned such that the body 13 of the mounting device fits through the hole. For attaching the mounting device and therefore the wire 16 to the panel 17, the body 13 of the mounting device is guided through the hole 18 with the wire attached thereto. Then, the mounting device is placed into the seat 20, whereby the wire 16 moves through the connection 19. In the seat 20, a further hole (obscured by the body 13 in Fig. 7) for the wire 16 is provided. Therefore, the mounting device and thus the wire 16 may easily be mounted to the panel 17.

In Fig. 8 a mounting device is shown, being similar to the one explained with reference to Figs. 5-7. The mounting device shown in Fig. 8 has a hemispherical body 28 which in turn has a cylindrical extension 23. A through hole (not shown) runs through the cylindrical extension 23 basically along the axis of the cylindrical extension 23 and continues through the hemispherical body 21. A channel or opening 22 is provided which is connected to the through hole. Similar to Figs. 5-7, for attaching a wire 16 to the mounting device of Fig. 8, the wire is guided through the through hole and then bent. Thereafter, the mounting device is positioned such that the bent part 16A of the wire 16 resides in the channel 22, which has the same effect as the bent part of the wire residing in the channel 14 of the mounting device of Figs. 5-7.

In Fig. 9, a corresponding mounting structure for mounting the mounting device of Fig. 8 to a panel 24 or the like is shown. The mounting structure has a hollow hemispherical portion 25 with an opening at the top thereof which broadens into an opening 26 having V-shaped side walls at a side of the hemispherical portion 25. For mounting the mounting device to the mounting structure, the hemispherical body 21 of the mounting device is inserted through the opening 26 into the hemispherical portion 25 such that the cylindrical extension 23 protrudes through the opening on top of the hemispherical portion 25. Fig. 10 shows the result of this mounting procedure. As a matter of course, other types of mounting structures are also possible, in particular a mounting structure like the one shown in Fig. 7 having appropriately shaped holes. Also, in case the panel 24 is opened on the bottom of the hemispherical portion 25, the wire 16 may be inserted through the opening on top of the hemispherical portion from the (in Fig. 9) lower side of the panel 24. In this case, no opening 26 is needed.

The mounting structures of Figs. 7, 9 and 10 may be fabricated together with the panel 17 or 24 for example by injection molding. On the other hand, it is also possible to add the required holes and/or to attach the seat 20 and the hemispherical portion 25, respectively, to the panel after the panel 17, 24 has been fabricated. Also, other forms than the cuboid shape of the body 13 of Fig. 5 or the hemispherical shape of the body 21 in Fig. 8 may be used, for example a cube-shape or a sphere. The mounting devices of Figs. 5-10 are preferably made from a plastic material.

In the mounting device as described above with reference to Figs. 5-10, instead of the through hole and the channel other mechanisms for attaching the wire to the mounting device may be provided, e.g. channels into which the wire may be clipsed. For instance, the through hole may be replaced by a further channel, and the wire may be bent and clipsed into the channel and the further channel for attaching the wire to the mounting device.

As already indicated above, the mounting device of the present invention may be used to mount a suspension mat as shown in Fig. 11 to a seat frame, but also may be used for other applications where it is necessary to mount a wire or a wire structure to a fixed structure.

In summary, the present invention provides mounting devices which are easy to manufacture and which prevent excessive noise originating from metal scraping on metal. Furthermore, the mounting devices may be attached to wires of a wire assembly like a suspension mat automatically, so that the wire assembly with the already attached mounting device(s) may be shipped to a customer. The above-mentioned automatic process may be easily controlled, e.g. by using cameras, and saves costs and time.

## Claims

1. A method for manufacturing a mounting device for mounting a wire (2) to a structure (30), said method comprising the steps of:
(a) placing a hollow tube (6) on an end portion (3) of said wire (2), and
(b) bending said end portion (3) together with said hollow tube (6) to form a hook, said mounting device comprising said bent end portion (3) surrounded by said hollow tube (6).

2. The method according to claim 1,
said method comprising, before step (a), the step of
(aa) cutting tube material to a desired length for forming said hollow tube (6).

3. The method according to claim 1 or claim 2,
wherein for step (b) said end portion (3) together with said hollow tube (6) is bent around a cylinder (12).

4. The method according to claim 3,
wherein said cylinder (12) has a diameter equal or greater to a diameter of said structure (30).

5. The method according to any one of the preceding claims,
wherein step (a) comprises the steps of
(ab) placing said hollow tube in a tube holder (5), and
(ac) moving said tube holder (5) together with said hollow tube (6) such that the hollow tube (6) is pushed onto said end portion (3) of said wire (2).

6. The method according to claim 5,
wherein said tube holder (5) comprises positioning means (9) for positioning said hollow tube (6) within said tube holder (5).

7. The method according to claim 5 or 6,
wherein said tube holder (5) comprises guiding means (9) for guiding said end portion (3) of said wire (2) into said hollow tube (6).

8. The method according to any one of the preceding claims,
wherein said tube (6) is circumferentially closed.

9. The method according to any one of claims 1-4,
wherein step (a) comprises clipsing the tube (6) on said end portion (3).

10. The method according to claim 9,
wherein said tube (6) has a slit for clipsing the tube (6) on said end portion (3).

11. The method according to any one of the preceding claims,
wherein said hollow tube (6) is made from a plastic material.

12. The method according to claim 11,
wherein said plastic material comprises polyoxymethylene.

13. The method according to any one of the preceding claims,
wherein said wire (2) is a wire of a suspension mat.

14. An apparatus for manufacturing a mounting device for mounting a wire (2) to a structure (30), comprising
a tube holder (5, 9) which holds a hollow tube (6) and places the hollow tube (6) on an end portion (3) of said wire (2), and
bending means (10, 11, 12) which bend said end portion (3) together with said hollow tube (6).

15. The apparatus according to claim 14,
wherein the apparatus is adapted for processing a plurality of wires (2) simultaneously.

16. The apparatus according to claim 14 or 15,
wherein the apparatus is adapted to perform the method according to any one of claims 1-13.

## Patentansprüche

1. Verfahren zur Herstellung einer Anbringungsvorrichtung zum Anbringen eines Drahtes (2) an eine Struktur (30), wobei das Verfahren die Schritte umfasst:
(a) Platzieren eines Hohlrohrs (6) auf einem Endabschnitt (3) des Drahtes (2), und
(b) Biegen des Endabschnitts (3) zusammen mit dem Hohlrohr (6), um einen Haken zu bilden, wobei die Anbringungsvorrichtung den gebogenen Endabschnitt (3), welcher von dem Hohlrohr (6) umgeben ist, umfasst.

2. Verfahren nach Anspruch 1, wobei das Verfahren vor Schritt (a) den Schritt (aa) Schneiden von Rohrmaterial zu einer gewünschten Länge, um das Hohlrohr (6) auszubilden, umfasst.

3. Verfahren nach Anspruch 1 oder Anspruch 2,
wobei für Schritt (b) der Endabschnitt (3) zusammen mit dem Hohlrohr (6) um einen Zylinder (12) gebogen wird.

4. Verfahren nach Anspruch 3,
wobei der Zylinder (12) einen Durchmesser gleich oder größer als der Durchmesser der Struktur (30) aufweist.

5. Verfahren nach einem der vorhergehenden Ansprüche,
wobei Schritt (a) die Schritte umfasst:
(ab) Platzieren des Hohlrohrs in eine Rohrhalterung (5), und
(ac) Bewegen der Rohrhalterung (5) zusammen mit dem Hohlrohr (6), so dass das Hohlrohr (6) auf den Endabschnitt (3) des Drahtes (2) geschoben wird.

6. Verfahren nach Anspruch 5,
wobei die Rohrhalterung (5) Positionierungsmittel (9) zum Positionieren des Hohlrohres (6) innerhalb der Rohrhalterung (5) umfasst.

7. Verfahren nach Anspruch 5 oder Anspruch 6,
wobei die Rohrhalterung (5) Führungsmittel (9) zum Führen des Endabschnitts (3) des Drahtes (2) in das Hohlrohr (6) umfasst.

8. Verfahren nach einen der vorhergehenden Ansprüche,
wobei das Rohr (6) in Umfangsrichtung geschlossen ist.

9. Verfahren nach einen der Ansprüche 1-4,
wobei Schritt (a) ein Anklemmen des Rohrs (6) auf den Endabschnitt (3) umfasst.

10. Verfahren nach Anspruch 9,
wobei das Rohr (6) einen Schlitz zum Anklemmen des Rohrs (6) auf den Endabschnitt (3) aufweist.

11. Verfahren nach einen der vorhergehenden Ansprüche,
wobei das Hohlrohr (6) aus einem Plastikmaterial gefertigt ist.

12. Verfahren nach Anspruch 11,
wobei das Plastikmaterial Polyoxymethylen umfasst.

13. Verfahren nach einen der vorhergehenden Ansprüche,
wobei der Draht (2) ein Draht aus einer Stützmatte ist.

14. Vorrichtung zur Herstellung einer Anbringungsvorrichtung zum Anbringen eines Drahtes (2) an eine Struktur (30) umfassend:
eine Rohrhalterung (5,9), welche ein Hohlrohr (6) hält und das Hohlrohr (6) auf einen Endabschnitt (3) des Drahtes (2) platziert, und
Biegemittel (10, 11, 12), welche den Endabschnitt (3) zusammen mit dem Hohlrohr (6) biegen.

15. Vorrichtung nach Anspruch 14,
wobei die Vorrichtung geeignet ist, eine Vielzahl von Drähten (2) gleichzeitig zu verarbeiten.

16. Vorrichtung nach Anspruch 14 oder 15,
wobei die Vorrichtung geeignet ist, das Verfahren nach einen der Ansprüche 1-13 auszuführen.

## Revendications

1. Procédé de fabrication d'un dispositif de montage pour monter un câble (2) sur une structure (30), ledit procédé comprenant les étapes consistant à :
(a) placer un tube creux (6) sur une portion d'extrémité (3) dudit câble (2), et
(b) courber ladite portion d'extrémité (3) et ledit tube creux (6) ensemble pour former un crochet, ledit dispositif de montage comprenant ladite portion d'extrémité pliée (3) entourée par ledit tube creux (6).

2. Procédé selon la revendication 1,
ledit procédé comprenant, avant l'étape (a), l'étape consistant à
(aa) couper un matériau de tube à une longueur souhaitée pour former ledit tube creux (6).

3. Procédé selon la revendication 1 ou la revendication 2,
dans lequel lors de l'étape (b), ladite portion d'extrémité (3) avec ledit tube creux (6) est courbée autour d'un cylindre (12).

4. Procédé selon la revendication 3,
dans lequel ledit cylindre (12) a un diamètre supérieur ou égal à un diamètre de ladite structure (30).

5. Procédé selon l'une quelconque des revendications précédentes,
dans lequel l'étape (a) comprend les étapes consistant à
(ab) placer ledit tube creux dans un porte-tube (5), et
(ac) déplacer ledit porte-tube (5) et ledit tube creux (6) ensemble de telle sorte que le tube creux (6) est poussé sur ladite portion d'extrémité (3) dudit câble (2).

6. Procédé selon la revendication 5,
dans lequel ledit porte-tube (5) comprend un moyen de positionnement (9) pour positionner ledit tube creux (6) à l'intérieur dudit porte-tube (5).

7. Procédé selon la revendication 5 ou 6,
dans lequel ledit porte-tube (5) comprend un moyen de guidage (9) pour guider ladite portion d'extrémité (3) dudit câble (2) dans ledit tube creux (6).

8. Procédé selon l'une quelconque des revendications précédentes,
dans lequel ledit tube (6) est ciconférentiellement fermé.

9. Procédé selon l'une quelconque des revendications 1 à 4,
dans lequel l'étape (a) comprend l'étape consistant à clipper le tube (6) sur ladite portion d'extrémité (3).

10. Procédé selon la revendication 9,
dans lequel ledit tube (6) est doté d'une fente pour clipper le tube (6) sur ladite portion d'extrémité (3).

11. Procédé selon l'une quelconque des revendications précédentes
dans lequel ledit tube creux (6) est composé d'un matériau plastique.

12. Procédé selon la revendication 11,
dans lequel ledit matériau plastique comprend le poly(oxyméthylène).

13. Procédé selon l'une quelconque des revendications précédentes,
dans lequel ledit câble (2) est un câble d'un mât de suspension.

14. Appareil de fabrication d'un dispositif de montage pour monter un câble (2) sur une structure (30), comprenant
un porte-tube (5, 9) qui porte un tube creux (6) et place le tube creux (6) sur une portion d'extrémité (3) dudit câble (2), et
des moyens de courbage (10, 11, 12) qui courbent ladite portion d'extrémité (3) et ledit tube creux (6) ensemble.

15. Appareil selon la revendication 14,
dans lequel l'appareil est adapté pour traiter une pluralité de câbles (2) simultanément.

16. Appareil selon la revendication 14 ou 15,
dans lequel l'appareil est adapté pour réaliser le procédé selon l'une quelconque des revendications 1 à 13.
